Europäisches Patentamt

European Patent Office

Office européen des brevets

(11) Publication number: **0 140 675**
**B1**

## (12) EUROPEAN PATENT SPECIFICATION

(45) Date of publication of patent specification: **11.04.90**

(21) Application number: **84307318.0**

(22) Date of filing: **24.10.84**

(51) Int. Cl.⁵: **C 08 J 9/00, C 08 L 97/00, B 29 C 67/20**

(54) Thermal insulating material.

(30) Priority: **01.11.83 GB 8329163**

(43) Date of publication of application:
**08.05.85 Bulletin 85/19**

(45) Publication of the grant of the patent:
**11.04.90 Bulletin 90/15**

(84) Designated Contracting States:
**AT BE CH DE FR GB IT LI LU NL SE**

(56) References cited:
**DE-A-1 484 161**
**FR-A- 533 329**
**FR-A-2 044 064**
**FR-A-2 211 341**
**GB-A- 739 118**

(73) Proprietor: **Euroroof Limited**
**Denton Drive**
**Northwich Cheshire CW9 7LG (GB)**

(72) Inventor: **Roy, John Marshall**
**Euroroof Ltd. Denton Drive**
**Northwich Cheshire CW9 7LG (GB)**

(74) Representative: **Denmark, James**
**c/o Bailey, Walsh & Co. 5 York Place**
**Leeds LS1 2SD Yorkshire (GB)**

Courier Press, Leamington Spa, England.

# Description

The invention relates to thermal insulation material for the construction and allied industries. A common insulation material is a foamed polymer in which inert gases are encased in closed cells of polymers such as polyurethane, polyisocyanurate and phenolic or urea formaldehyde or the like. Such foamed polymers have a desirably low thermal conductivity but are somewhat dimensionally unstable.

A thermal insulation material of improved dimensional stability compared with foamed polymer is expanded corkboard, but this product has relatively high thermal conductivity when compared with foamed polymers.

According to the present invention in one aspect there is provided a thermal insulation material comprising pre-formed expanded corkboard wherein voids between the granules are filled with a foamed polymer. According to a further aspect of the invention there is provided a method of producing a thermal insulation material comprising the step of introducing a foamed polymer into voids between granules in an expanded corkboard. Preferably the polymer is foamed *in situ*. The process of introducing foamed polymer may comprise the displacement of air from within the voids by foam or the removal of air and the replacement by foamed polymer. The replacement or displacement may be effected in a compression or a vacuum system, and the polymer may include additives to improve fire resistance or durability under exposure to sunlight.

All or substantially all of the voids may be filled with foamed polymer, but in one preferred application of the invention, the foam is introduced into only some of the voids leaving the remaining voids filled with air so that granules bounding such air-filled voids may receive a waterproof membrane treatment.

Whether completely or only partially filled with foamed polymer, the corkboard may have a layer of foamed polymer applied thereto in order further to decrease the thermal conductivity. The outer face of the foamed polymer layer may be provided with a skin formed from a sheet or film of paper, polymer or glass fibre or metal foil.

The expanded corkboard may take the form of a block or slab, and after the filling of the voids with foamed polymer the corkboard may be cut or machined to a desired profile, and the cut or as it may be machined surface may be faced with a sheet or film of paper, polymer or glass fiber or metal foil.

Some of the foamed polymer which fills air voids within the expanded corkboard may also provide an adhesive at a face of the corkboard by which the insulating material may be adhered to a flexible or, preferably, rigid sheet material to form a structural panel.

Embodiments of the invention will now be described by way of example and with reference to the accompanying drawings, of which:—

Fig. 1 is a sectional view of a slab of conventional corkboard; and

Figs 2 to 6 are sectional views of thermal insulation materials in various embodiments.

Expanded corkboard is normally manufactured by expanding granules of natural cork by treatment with super-heated steam under pressure in an autoclave. During the process, natural resins are released from the cork which bond the expanded granules together at contiguous surfaces to form a coherent mass. The mass is then cut to the required shape which may, for instance, be a slab of constant thickness.

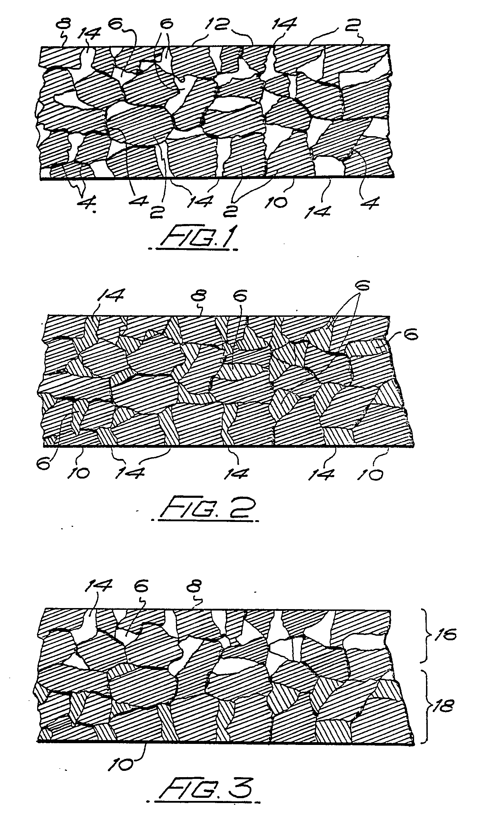

Fig. 1 is a section through such a slab which shows a plurality of expanded cork granules 2 in contact with one another at positions 4 in an assembly which, because of the irregularity of the shape of the granules leaves voids 6 of irregular shape between the granules.

In cutting the mass of expanded cork granules to form the opposed faces 8, 10, some of the granules are cut to present a plane face 12, whilst some of the voids such as those designated 14 are open at the respective surfaces. Whilst it may appear from Fig. 1 that most of the voids 6 are totally enclosed, in fact by reason of the three dimensional irregularity of the granules 2, voids which are distinct from one another in one section may communicate with one another in a parallel section and in practice at least most of the voids are in communication with one another and with voids opening at the surfaces 8, 10.

As produced and marketed, the voids in expanded corkboards are filled with air and the air pockets, though not totally enclosed, provide a degree of thermal insulation.

Fig. 2 shows how the corkboard of Fig. 1 may be improved, according to one embodiment of the invention, the improvement comprising filling all the voids 6, 14 with a foamed polymer. The polymer may be any suitable such as polyurethane, polyisocyanurate or a phenolic or urea formaldehyde polymer and the foaming process which is known in the art provides a plurality of closed cells within the polymer, the cells being normally filled with an inert gas. The foamed polymer which may contain an additive to improve serviceability offers a high degree of thermal insulation and the matrix structure of bonded cork granules provides dimensional stability with the result that the composite product combines both advantages.

The introduction of the foamed polymer into the corkboard may be effected by placing the corkboard in a chamber, evacuating the chamber so that air is removed from the voids 6, 14 and introducing polymer through the voids 14 at one or both faces 8, 10 so as to replace the air, and then causing or allowing the polymer to foam according to techniques well known in the art. In another method, foamable polymers are introduced under pressure through the voids 14 opening at one of the faces, such as face 10, whereby air is displaced upwardly from the voids 6 as they are filled by polymer and the displaced air escapes through the voids 14 at the other face 8.

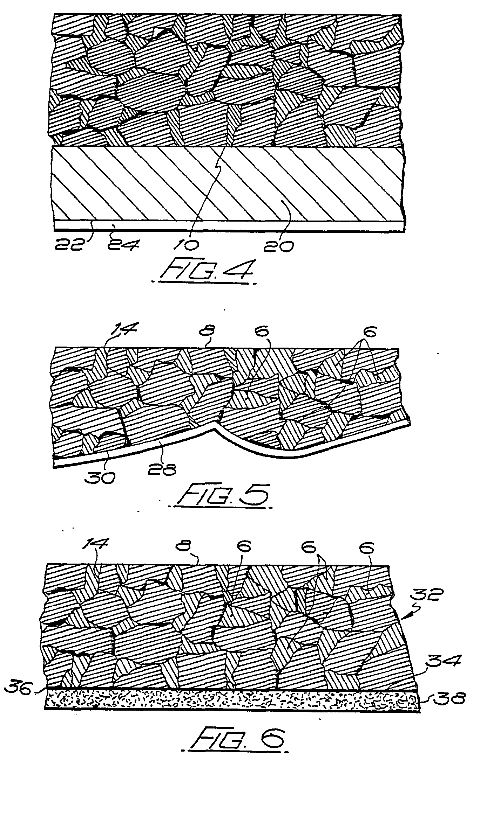

In a refinement of the process resulting in a product shown in Fig. 3, the expanded polymer does not penetrate throughout the whole thickness of the corkboard but replaces air in only a layer 18 of cells 6, leaving a layer 16 of cells 6, 14 at the surface 8 filled with air. The surfaces of the cork granules bounding the air-filled voids can thus be provided with a waterproofing membrane to make the board suitable for use in wet environments, such as for example in a roofing material.

In another embodiment shown in Fig. 4, a complete layer 20 of foamed polymer is formed on the face 10 of the corkboard slab in order further to decrease the thermal conductivity. The exposed face 22 of the layer 20 is itself covered by a skin 24 which according to requirements may be, for example, a sheet of paper, a film of plastics, a sheet of woven or non-woven glass fibre or an aluminium foil, or a laminate comprising a combination of two or more of such sheets, films or foils. A particularly advantageous skin is of glass fibre coated with bitumen or resin.

The polymer-filled expanded corkboard can readily be cut or machined into a non-linear profile as required, and Fig. 5 shows a section through a polymer-filled corkboard slab, machined at face 30 into a non-linear profile. Face 30 is provided with a skin comprising a sheet, film or foil such as those described in regard to the Fig. 4 embodiment. Fig. 6 shows a structural panel comprising a slab 32 of expanded corkboard in which all the voids have been filled with foam polymer. More of the same polymer at face 34 of the slab 32 provides an adhesive film 36 by which the slab is bonded to a sheet 38 of rigid material.

Whilst it has been assumed above that the polymer will be foamed *in situ*, the invention also encompasses the concept of a pre-foamed polymer being passed into the voids between the cork granules, if such a procedure is possible. Moreover, it is within the scope of the invention to produce a polymer-filled corkboard in which separate expanded cork granules are bonded together with the intermediate voids filled with foamed polymer.

## Claims

1. A thermal insulation material comprising pre-formed expanded corkboard characterised in that voids between granules of cork contain a foamed polymer.

2. A material according to Claim 1 wherein at least some of the voids are filled with the polymer.

3. A material according to Claim 1 or Claim 2 wherein the polymer contains an additive to improve serviceability.

4. A body of material as claimed in any one of Claims 1—3, externally of which is a layer of foamed polymer.

5. A body of material according to Claim 4 of which an outer surface is provided with a skin of sheet material.

6. A body of material according to Claim 4 or Claim 5 of which an outer surface is shaped to a desired profile.

7. A structural panel comprising a material according to any one of Claims 1—3 or a body according to any one of Claims 4—6 bonded to a rigid sheet.

8. A method of producing a thermal insulating material comprising introducing a foamed polymer into voids between granules of cork in pre-formed expanded corkboard.

9. A method of producing a thermal insulating material comprising introducing a foamable polymer into voids between granules of cork in pre-formed expanded corkboard, and foaming the polymer in situ in the voids.

10. A method according to Claim 8 or Claim 9 wherein air is first removed from the voids and is then replaced by polymer.

11. A method according to any one of Claims 8—10 wherein the surface of granules bounding voids incompletely filled with polymer are given a waterproofing treatment.

## Patentansprüche

1. Wärmedämmaterial aus vorgeformter Platte aus expandiertem Kork, dadurch gekennzeichnet, daß Hohlräume zwischen Korkkörnern ein geschäumtes Polymer enthalten.

2. Material nach Anspruch 1, wobei wenigstens einige der Hohlräume mit dem Polymer gefüllt sind.

3. Material nach Anspruch 1 oder Anspruch 2, wobei das Polymer einen Zusatz enthält, um die Verwendbarkeit zu verbessern.

4. Körper aus einem Material wie in irgendeinem der Ansprüche 1 bis 3 beansprucht, wobei außerhalb dieses eine Schicht aus geschäumten Polymer ist.

5. Körper aus einem Material nach Anspruch 4, bei dem eine äußere Oberfläche mit einer Haut aus einem Blattmaterial vorgesehen ist.

6. Körper aus einem Material nach Anspruch 4 oder Anspruch 5, bei dem eine äußere Oberfläche zu einem gewünschten Profil geformt ist.

7. Struktur- bzw. Bauplatte aus einem Material nach irgendeinem der Ansprüche 1 bis 3 oder einem Körper nach irgendeinem der Ansprüche 4 bis 6, an eine starre Platte gebunden.

8. Verfahren zur Herstellung eines Wärmedämmaterials, die Einführung eines geschäumten Polymers in Hohlräume zwischen Korkkörnern in einer vorgeformten Platte aus expandiertem Kork umfassend.

9. Verfahren zur Herstellung eines Wärmedämmaterials, die Einführung eines schäumbaren Polymers in Hohlräume zwischen Korkkörner in einer vorgeformten Platte aus expandiertem Kork und Schäumen des Polymers in situ in den Hohlräumen umfassend.

10. Verfahren nach Anspruch 8 oder Anspruch 9, wobei Luft zuerst aus den Hohlräumen entfernt wird und dann durch Polymer ersetzt wird.

11. Verfahren nach irgendeinem der Ansprüche 8 bis 10 wobei die Oberfläche der Körner, die an Hohlräume angrenzen, die unvollständig mit Polymer gefüllt sind, einer wasserdichtmachenden Bearbeitung unterzogen werden.

**Revendications**

1. Matériau d'isolation thermique comprenant une plaque préformée de liège expansé, caractérisé en ce que les interstices entre les granules de liège contiennent un polymère expansé.

2. Matériau selon la revendication 1, caractérisé en ce qu'au moins quelques uns des interstices sont remplis de polymère.

3. Matériau selon la revendication 1 ou 2, caractérisé en ce que le polymère contient un additif pour améliorer sa possibilité d'utilisation.

4. Elément composé d'un matériau selon l'une des revendications 1 à 3, caractérisé en ce qu'il présente sur sa surface externe une couche de polymère expansé.

5. Elément selon la revendication 4, caractérisé en ce qu'une surface extérieure est prévue avec une peau d'un matériau en feuille.

6. Elément selon la revendication 4 ou 5, caractérisé en ce qu'une surface externe présente une forme selon un profil déterminé.

7. Panneau de structure, caractérisé en ce qu'il comprend un matériau selon l'une des revendications 1 à 3 ou un élément selon l'une des revendications 4 à 6, ledit élément étant lié à une feuille rigide.

8. Procédé de production d'un matériau d'isolation thermique comprenant l'introduction d'un polymère expansé dans des interstices entre des granules de liège d'une plaque préformée de liège expansé.

9. Procédé de production d'un matériau d'isolation thermique comprenant l'introduction de polymère expansible dans les interstices entre les granules de liège d'une plaque préformée de liège expansé et l'expansion du polymère in situ dans les interstices.

10. Procédé selon la revendication 8 ou 9, caractérisé en ce que l'air est d'abord extrait des interstices et est ensuite remplacé par le polymère.

11. Procédé selon l'une des revendications 8 à 10, caractérisé en ce que la surface des granules reliant les interstices remplis incomplètement de polymère est soumise à un traitement d'imperméabilisation.

FIG.1

FIG.2

FIG.3

22  24  10  20

_FIG. 4_

14  8  6  6

30  28

_FIG. 5_

14  8  6  6  6

32

34

36  38

_FIG. 6_